Europäisches Patentamt

European Patent Office

Office européen des brevets

(19)

(11)     EP 0 765 549 B1

(12)     **FASCICULE DE BREVET EUROPEEN**

(45) Date de publication et mention
de la délivrance du brevet:
**27.02.2002   Bulletin 2002/09**

(21) Numéro de dépôt: **95923378.4**

(22) Date de dépôt: **13.06.1995**

(51) Int Cl.$^7$: **H04L 5/06**

(86) Numéro de dépôt international:
**PCT/FR95/00775**

(87) Numéro de publication internationale:
**WO 95/34967 (21.12.1995 Gazette 1995/54)**

(54) **SIGNAL OFDM ORGANISE DE FACON A SIMPLIFIER LA RECEPTION**

ORDNUNG EINES OFDM-SIGNALS ZUR VEREINFACHUNG DES EMPFANGS

OFDM SIGNAL ORGANIZED SO AS TO SIMPLIFY RECEPTION

(84) Etats contractants désignés:
**DE GB IT**

(30) Priorité: **16.06.1994   FR 9407612**

(43) Date de publication de la demande:
**02.04.1997   Bulletin 1997/14**

(73) Titulaires:
- **FRANCE TELECOM**
  **75015 Paris (FR)**
- **TELEDIFFUSION DE FRANCE**
  **75932 Paris Cédex 15 (FR)**

(72) Inventeurs:
- **MICHON, Vincent**
  **F-35000 Rennes (FR)**
- **LE FLOCH, Bernard**
  **F-35000 Rennes (FR)**
- **SUEUR, Bertrand**
  **F-35000 Rennes (FR)**
- **RIVIERE, Marc**
  **F-35340 Liffre (FR)**

(74) Mandataire: **Vidon, Patrice**
**Cabinet Patrice Vidon Le Nobel (Bât. A)**
**Technopôle Atalante 2, allée Antoine Becquerel**
**BP 90333**
**35703 Rennes Cedex 7 (FR)**

(56) Documents cités:
**EP-A- 0 589 709**

- **BELL SYSTEM TECHNICAL JOURNAL, vol. 45, no. 10, Décembre 1966 NEW YORK US, pages 1775-1796, CHANG 'Synthesis of band-limited orthogonal signals for multichannel data transmission'**
- **ALTA FREQUENZA, vol. LVII, no. 10, Décembre 1988 MILANO IT, pages 545-559, DEL R & FANTACCI 'Digital multicarrier demodulator for regenerative communication satellites'**
- **IEEE INTERNATIONAL CONFERENCE ON COMMUNICATINS 1993, 23 Mai 1993 GENEVA, CH, pages 1785-1790, DE BOT ET AL. 'An example of a multi-resolution digital terrestrial TV modem'**

**Description**

Le domaine de l'invention est celui de la transmission de signaux mettant en oeuvre simultanément une pluralité de fréquences porteuses orthogonales (ou quasi-orthogonales) et codées chacune par des éléments de données distincts.

Ces signaux sont généralement appelés signaux OFDM (Orthogonal Frequency Division Multiplex (multiplexage de fréquences orthogonales)). Un tel signal OFDM est par exemple utilisé dans le système de diffusion numérique décrit notamment dans le brevet français FR-86 09622 déposé le 2 juillet 1986 (publié sous le numéro FR-2 601 210) et dans le document "Principes de modulation et de codage canal en radiodiffusion numérique vers les mobiles" (M. Alard et R. Lassalle ; Revue de l'U.E.R, n° 224, août 1987, pp. 168-190), et connu sous le nom de système COFDM (Coded Orthogonal Frequency Division Multiplex (multiplexage de fréquences orthogonales codées)).

Ce système COFDM a notamment été développé dans le cadre du projet européen DAB (Digital Audio Broadcasting (diffusion audionumérique)). Il est numérique. Plus généralement, il permet la transmission de tout type de signaux numériques ou analogiques (échantillonnés mais non nécessairement quantifiés).

La modulation de ces signaux numériques à multiplex de fréquences nécessite l'utilisation de démodulateurs spécifiques. Un tel démodulateur est par exemple décrit dans le document de brevet FR-86 09622 précité.

Une autre méthode de construction de tels signaux est décrite dans "Synthesis of Band-Limited Orthogonal Signals for Multichannel Data Transmission" (Robert W. Chang, Bell System Technical Journal, déc. 1966, vol. 45, n°10, pp. 1775-1796). Cette méthode est basée sur l'utilisation de filtres spécifiques pour chaque porteuse, traitée indépendamment et portant un signal indépendant. Une technique correspondante de réception est également proposée.

On sait qu'un des éléments essentiels d'un récepteur de signaux multiporteuses est le circuit de démodulation, qui extrait du signal reçu (le multiplex de porteuses orthogonales) l'information brute portée par chaque porteuse prise séparément.

Classiquement, ce circuit réalise une transformation mathématique du signal, et par exemple une transformée de Fourier discrète (TFD). De nombreuses autres transformées peuvent être utilisées. Toutefois, par la suite, on désigne par simplification non limitative ce circuit sous les termes de circuit TFD.

La complexité d'un tel circuit est proportionnelle d'une part au nombre de fréquences transmises simultanément (dimension fréquentielle), et d'autre part à la durée $T_s$ des symboles transmis (dimension temporelle). Ce circuit TFD est un élément complexe et donc coûteux. Il est donc crucial de simplifier ce circuit, notamment pour les récepteurs à bas coût.

Selon les techniques connues, on limite la dimension temporelle, en réduisant le temps symbole $T_s$ et/ou l'intervalle de garde $\Delta$ inséré entre deux symboles consécutifs. Cela permet de limiter le nombre de données traitées par la TFD, au détriment bien sûr de la qualité du signal reçu. En effet, plus le temps symbole est long, plus l'effet de sélectivité du canal est réduit, et pour un intervalle de garde donné permettant de limiter l'Interférence Inter Symboles à une valeur préalablement choisie, le débit transmis augmente avec la longueur du temps-symbole.

En d'autres termes, le choix de la taille TFD est toujours un compromis entre la qualité du signal reçu et le coût de revient de cette TFD.

Il n'est pas possible d'agir, selon les techniques connues, sur la dimension fréquentielle. La TFD doit prendre en compte systématiquement l'ensemble des N porteuses formant le multiplex transmis, même si l'information recherchée par le récepteur est répartie sur seulement une partie des fréquences porteuses.

En effet, classiquement, un signal OFDM émis peut porter plusieurs signaux indépendants. Par exemple, dans le cas de signaux de télévision, on peut prévoir d'émettre quatre signaux distincts à 6 Mbit/s sur un signal OFDM occupant une bande de 8 MHz (avec une efficacité spectrale de 4 bit/s/Hz). Bien que l'on souhaite récupérer un seul signal source, il est nécessaire de prendre en compte toutes les porteuses en entrée de la TFD, ce qui induit des calculs complexes et partiellement inutiles.

Par ailleurs, il est avantageux, en général, d'utiliser le plus possible de fréquences porteuses, notamment pour augmenter la durée des symboles transmis, comme indiqué précédemment.

A nouveau, on se trouve confronté à un compromis entre le nombre de porteuses et la complexité du circuit de démodulation.

L'invention a notamment pour objectif de pallier ces inconvénients de l'état de la technique.

Plus précisément, un objectif de l'invention est de fournir une technique permettant de réduire les traitements à effectuer dans les récepteurs, sans perte de qualité du signal, c'est-à-dire, notamment, sans qu'il soit nécessaire de réduire le temps symbole.

Un autre objectif de l'invention est de fournir une telle technique, n'induisant pas de contraintes trop lourdes au niveau de l'émission, et notamment ne nécessitant pas d'élargissement de la bande de fréquence utilisée.

L'invention a également pour objectif de fournir une telle technique, permettant de définir plusieurs niveaux de qualité de récepteurs.

Ces objectifs, ainsi que d'autres qui apparaîtront par la suite, sont atteints selon l'invention par un signal destiné à être transmis vers une pluralité de récepteurs, du type comprenant au moins deux signaux source et constitué d'une pluralité de fréquences porteuses sensiblement orthogonales modulées indépendamment, réparties sur une bande de fréquence déterminée,

signal dans lequel ladite bande de fréquence est découpée en au moins deux sous-bandes fréquentielles comprenant chacune un jeu desdites fréquences porteuses sensiblement orthogonales, et dans lequel on affecte à chacune desdites sous-bandes l'un desdits signaux source, de façon qu'un récepteur puisse extraire du signal transmis, par filtrage, au moins une desdites sous-bandes et effectuer un traitement de démodulation uniquement sur les fréquences porteuses contenues dans les sous-bandes extraites.

Par sous-bandes, on entend des sous-ensembles de porteuses non nécessairement disjoints (une porteuse peut appartenir à plusieurs sous-bandes), ni contigus (deux porteuses d'une sous-bande peuvent être séparés par une ou plusieurs porteuses n'appartenant pas à cette sous-bande). On peut également prévoir que certains signaux source soient "vides", c'est-à-dire associés à des porteuses non émises.

Ainsi, l'invention concerne une nouvelle structure de signal à multiplex de porteuses orthogonales permettant de limiter les traitements effectués dans les récepteurs.

Plus précisément, l'invention permet de décorréler le nombre Q de porteuses traitées dans le récepteur du nombre P (Q<P) de porteuses émises. Ainsi, on bénéficie à l'émission des avantages d'une "grande" TFD inverse (P points) et à la réception des avantages d'une "petite" TFD (Q points).

Il est à noter que cette structure de signal est sans rapport avec la technique classique consistant à émettre chaque signal source indépendamment, dans des bandes de fréquences distinctes et disjointes.

En effet, dans ce cas, il s'agit de signaux différents, émis par des émetteurs a priori différents. Cela peut induire des écarts de puissance très importants, et donc des perturbations, entre deux signaux. Au contraire, selon l'invention, un seul signal est synthétisé et transmis.

Par ailleurs, selon la technique connue, il est nécessaire de ménager une bande de fréquence très importante (de l'ordre de 1 MHz) entre deux signaux pour limiter les interférences (orthogonalité par supports fréquentiels disjoints). Au contraire, selon l'invention, les sous-bandes peuvent être jointives, du fait que le signal émis est synthétisé comme un tout, et que les porteuses sont orthogonales, même de sous-bande à sous-bande.

Cette structure de signal n'est pas évidente au vu des signaux OFDM connus. En effet, d'une part, elle va a priori à l'encontre de l'idée qu'il est préférable de répartir les données sur la bande de fréquence la plus large possible, pour bénéficier de la meilleure diversité en fréquence. D'autre part, elle ne peut pas être exploitée directement dans les récepteurs OFDM. Comme cela apparaîtra par la suite, il est en effet nécessaire de contrôler la transposition du signal reçu, pour centrer la (ou les) sous-bande (s) souhaitée(s).

Avantageusement, lesdites sous-bandes sont jointives.

De façon préférentielle, lesdites sous-bandes présentent des largeurs de bandes identiques. Cela permet de simplifier le traitement dans les récepteurs, et de conserver plus facilement au niveau de l'émission une bonne diversité en fréquence, dès lors qu'un décodage adéquat, de préférence à maximum de vraisemblance, est mis en oeuvre indépendamment sur chaque sous-bande.

Optionnellement, l'affectation desdits signaux source auxdites sous-bandes peut être variable dans le temps, de façon à améliorer la diversité en fréquence.

Par exemple, ladite affectation peut être modifiée à chaque trame dudit signal. Une trame est un ensemble de un ou plusieurs symboles.

On peut notamment prévoir que l'émetteur réalise, à chaque nouvelle trame, une permutation de l'affectation. Ainsi on peut combattre les évanouissements sélectifs affectant chacune des sous-bandes par la diversité fréquentielle maximale permise par la bande occupée par l'ensemble de ces sous-bandes.

Selon un mode de réalisation avantageux de l'invention au moins un premier desdits signaux source correspond à des informations de base d'un programme et au moins un second desdits signaux source correspond à des informations complémentaires desdites informations de base, de façon à définir au moins deux niveaux de qualité de récepteur :

- un premier niveau de qualité correspondant à des récepteurs capables de traiter uniquement la sous-bande correspondant audit premier signal source ; et
- un second niveau de qualité correspondant à des récepteurs capables de traiter les sous-bandes correspondant auxdits premier et second signaux source.

Par programme, on entend un ou plusieurs signaux source (ou composantes) dont les sous-bandes sont préférentiellement jointives. Ainsi, un programme peut avoir plusieurs composantes et, réciproquement, une composante peut appartenir à plusieurs programmes.

Cela permet notamment de définir plusieurs niveaux de qualité de récepteurs. Par exemple, dans le cas de signaux de télévision, on peut prévoir une première sous-bande comprenant des informations permettant de restituer une image de qualité moyenne et une seconde sous-bande comprenant soit des informations complémentaires permettant, en coopération avec les informations de la première sous-bande, de restituer une image haute définition, soit des informations permettant de reconstituer une seconde image.

On peut alors définir au moins trois types de récepteurs :

- un récepteur bas de gamme ne traitant que la première sous-bande ;
- un récepteur moyenne gamme qui traite l'une quelconque des première et seconde sous-bandes (voisines dans l'espace des fréquences, de préférence) ;
- un récepteur haut de gamme, traitant tout le signal émis, et permettant soit la visualisation simultanée de plusieurs programmes, par exemple selon la technique d'insertion d'images ("picture in picture" en anglais), soit la restitution de l'image haute définition d'origine.

L'invention concerne également un procédé d'émission d'un signal tel que décrit ci-dessus et comprenant les étapes suivantes :

- affectation audit signal d'une bande de fréquence déterminée, dans laquelle est définie une pluralité de fréquences porteuses orthogonales ;
- découpage de ladite bande de fréquence en au moins deux sous-bandes de fréquence, comprenant chacune un jeu desdites fréquences porteuses sensiblement orthogonales ;
- réception d'au moins deux signaux source autonomes à émettre ;
- affectation à chacun desdits signaux source d'une desdites sous-bandes de fréquence ;
- regroupement desdites sous-bandes, de façon à former ledit signal à émettre ; et ;
- émission dudit signal à émettre.

Avantageusement, lesdites sous-bandes sont jointives.

Preférentiellement, ladite étape de regroupement des sous-bandes est précédée d'une étape de codage indépendant et d'entrelacement fréquentiel et temporel de chacun desdits signaux source, de façon à obtenir un jeu de signaux codés destinés à moduler chacun une desdites fréquences porteuses de la sous-bande affectée audit signal source.

L'invention concerne encore les récepteurs d'un tel signal. Avantageusement, ces récepteurs comprennent :

- des moyens de sélection d'un programme donné, correspondant à au moins une desdites sous-bandes ; et
- des moyens de transformation mathématique agissant sur les fréquences porteuses contenues dans la ou les sous-bandes sélectionnées.

Selon une caractéristique essentielle de l'invention, en effet, les moyens de sélection d'un programme donné permettent de réaliser une transposition du signal reçu qui n'est pas une opération figée (contrairement aux techniques classiques). Au contraire, cette transposition subit un décalage fonction des sous-bandes souhaitées, avant l'application de la TFD. Bien-sûr, cette TFD ne porte que sur les sous-bandes extraites, ce qui réduit d'autant le traitement à effectuer.

Selon un premier mode de réalisation, de type analogique, lesdits moyens de sélection comprennent des moyens de transposition analogique comprenant un premier oscillateur de transposition RF et un second oscillateur de transposition FI, et des moyens de contrôle de la fréquence d'oscillation dudit premier et/ou dudit second oscillateur, en fonction de la ou des sous-bandes sélectionnées, de façon que celles-ci soient centrées sur une fréquence prédéterminée.

Selon un second mode de réalisation, de type numérique, lesdits moyens de sélection comprennent des premiers moyens de transposition analogique numérique et des seconds moyens de transposition numérique variables en fonction de la ou des sous-bandes sélectionnées, et des moyens de sous-échantillonnage.

Préférentiellement, lesdits moyens de transformation mathématique agissent sur un nombre de fréquences porteuses légèrement supérieur au nombre de fréquences porteuses contenues dans la ou les sous-bandes extraites, de façon à compenser l'imperfection due au filtrage d'extraction desdites sous-bandes. Par imperfection, on entend notamment les replis de spectres résiduels.

D'autres caractéristiques et avantages de l'invention apparaîtront à la lecture de la description suivante d'un mode de réalisation préférentiel de l'invention, donné à titre de simple exemple illustratif et non limitatif, et des dessins annexés, dans lesquels :

- la figure 1 est un exemple de signal selon l'invention, correspondant à 4 signaux de télévision indépendants de 6 Mbits/s chacun ;
- la figure 2 présente un schéma synoptique d'un émetteur construisant et émettant le signal illustré en figure 1 ;
- la figure 3 illustre le principe de la transposition en bande de base du signal selon l'invention ;
- la figure 4 est un exemple de démodulateur analogique selon l'invention ;
- la figure 5 est un exemple de démodulateur numérique selon l'invention.

Comme indiqué précédemment, l'invention concerne un signal formé d'un pluralité de fréquences orthogonales. Le mode de réalisation décrit par la suite correspond à la diffusion de quatre signaux de télévision, selon la technique COFDM déjà citée.

Il ne s'agit bien-sûr que d'un exemple : le nombre et la taille des sous-bandes, le type des signaux source et la technique d'émission mise en oeuvre peuvent varier.

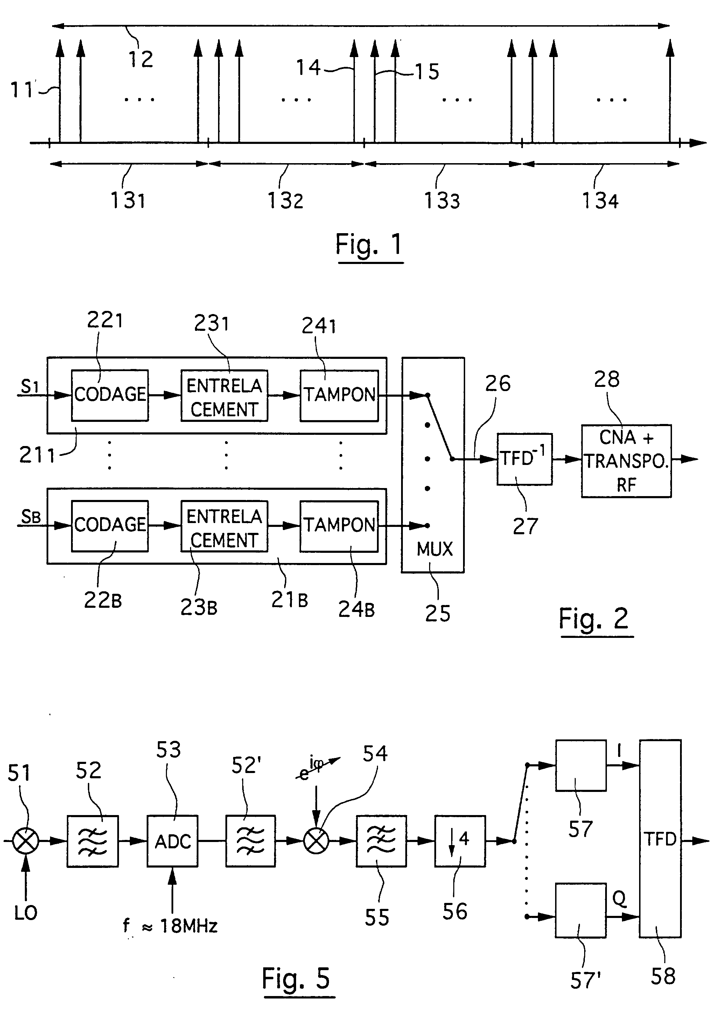

Dans l'exemple de la figure 1, on considère donc un signal OFDM comprenant classiquement 8 192 porteuses 11 (dont 7 000 utiles), réparties sur une bande de fréquence 12 de 9 MHz. Avec un codage à un taux de 4 bit/s/Hz, il est alors possible de transmettre environ 24 Mbit/s.

Selon l'invention, la bande de fréquence 12 est découpée en 4 sous-bandes, ou blocs, $13_1$ à $13_4$, pouvant porter chacun 6 Mbit/s. Ces 6 Mbit/s peuvent correspondre chacun à un programme de télévision de qualité standard. Le nombre et la taille des blocs sont bien sûr purement indicatifs.

Chaque bloc $13_i$ porte des données correspondant à un signal indépendant ou autonome. En d'autres termes, il n'est pas nécessaire, pour reconstituer ce signal, de récupérer d'autres fréquences porteuses que celles du bloc considéré. Toutefois, aucune séparation n'est nécessaire, par exemple entre les porteuses 14 et 15.

Il est à noter cependant qu'un signal autonome ne correspond pas forcément directement à un programme (de télévision, par exemple). Il peut également s'agir de signaux complémentaires d'amélioration de la qualité d'un signal de base, ou plus généralement, de tout signal constitutif d'un ensemble.

Dans le cas d'un signal COFDM, le signal émis en RF est formé d'une succession temporelle de symboles de durée Ts = ts + $\Delta$ où ts est la durée du symbole utile (ts = NT) sur laquelle portera la démodulation et où $\Delta$ représente la durée de l'intervalle de garde.

Chaque symbole s'écrit alors :

$$x(t) = \sum_{i=0}^{B-1} x_i(t) = \sum_{i=0}^{B-1} Re \sum_{k \in K_i} C_k e^{2i\Pi f_k t}$$

où $t \in [-\Delta, ts]$
et $f_k = f_0 + k/ts$

avec $C_k$ = élément de l'alphabet - fini ou non - de modulation
$f_o$ = fréquence arbitraire
N = nombre total de porteuses synthétisées. Pour des raisons pratiques, N est souvent une puissance entière de 2 (par exemple N = 8192) supérieure au nombre P de porteuses effectivement modulées. Les (N-P) porteuses supplémentaires (dites non émises) sont alors modulées par 0 ($C_k$ = 0 pour k $\notin$ $\xi$, $\xi$ étant l'ensemble des porteuses utiles du signal.
ou encore

$$x(t) = Re \sum_{k=0}^{N-1} C_k e^{2i\Pi f_k t}$$

où :

B est le nombre de blocs,
$K_i$ est l'ensemble des entiers $[k_i, k_{i+1}[$
avec $k_0$ = 0 et $k_{i+1}$ = k; + $Q_i$ ($Q_i$ quelconque, nombre de porteuses dans le bloc Bi).

Par exemple, le signal peut être formé de 8 192 porteuses organisées en 6 blocs dont seulement 4 sont utiles :

- $B_0$ formé de porteuses $k_0$ = 0 à 595, porteuses non émises ;
- $B_1$ formé de porteuses $k_1$ = 596 à 2345, à porteuses allouées à un premier programme ;
- $B_2$ formé de porteuses $k_2$ = 2346 à 4095, à porteuses allouées à un deuxième programme ;
- $B_3$ formé de porteuses $k_3$ = 4096 à 5845, à porteuses allouées à un troisième programme ;
- $B_4$ formé de porteuses $k_4$ = 5846 à 7595, à porteuses allouées à un quatrième programme ;
- $B_5$ formé de porteuses $k_5$ = 7596 à 8191, non émises.

La figure 2 présente le synoptique général d'un émetteur capable de générer et émettre un signal selon l'invention.

Il comprend tout d'abord 4 chaînes $21_1$ à $21_B$ parallèles indépendantes correspondant à B signaux source, et B blocs dans le signal pour cet exemple particulier.

Chaque signal source $S_i$ (i variant de 0 à B-1) subit un codage de signal $22_i$, s'il s'agit d'un signal numérique. Il peut s'agir par exemple du codage décrit dans le document Alard et Lassalle déjà cité. Si le signal est analogique, il est simplement échantillonné.

Ensuite, les données sont avantageusement entrelacées en fréquence et/ou en temps ($23_i$). Bien sûr, cet entrelacement est fait de façon stable, c'est-à-dire de façon que les données du signal $S_i$ restent dans le bloc affecté à $S_i$.

Puis les données sont stockées dans des mémoires tampons $24_i$ permettant la réalisation du signal complet, formé d'une série de symboles $C_k$ 26 par multiplexage fréquentiel 25 (c'est-à-dire lecture successive de chaque bloc dans les tampons $24_i$).

A chaque trame, l'ordre de lecture des tampons peut changer (selon une séquence connue des récepteurs). Ainsi, il est possible de maintenir les qualités de diversité en fréquence d'un signal COFDM classique.

Les symboles $C_k$ sont ensuite traités classiquement, par transformation de Fourier inverse (TFD$^{-1}$) 27, puis conversion numérique/analogique, transposition en RF et émission 28. Comme indiqué précédemment, un seul signal est émis. Il n'y a donc pas d'écart de puissance significatif entre deux blocs.

Du fait de la structure du signal, il est possible à la réception d'utiliser une transformation agissant sur un nombre moindre de points que la transformation inverse mise en oeuvre à l'émission.

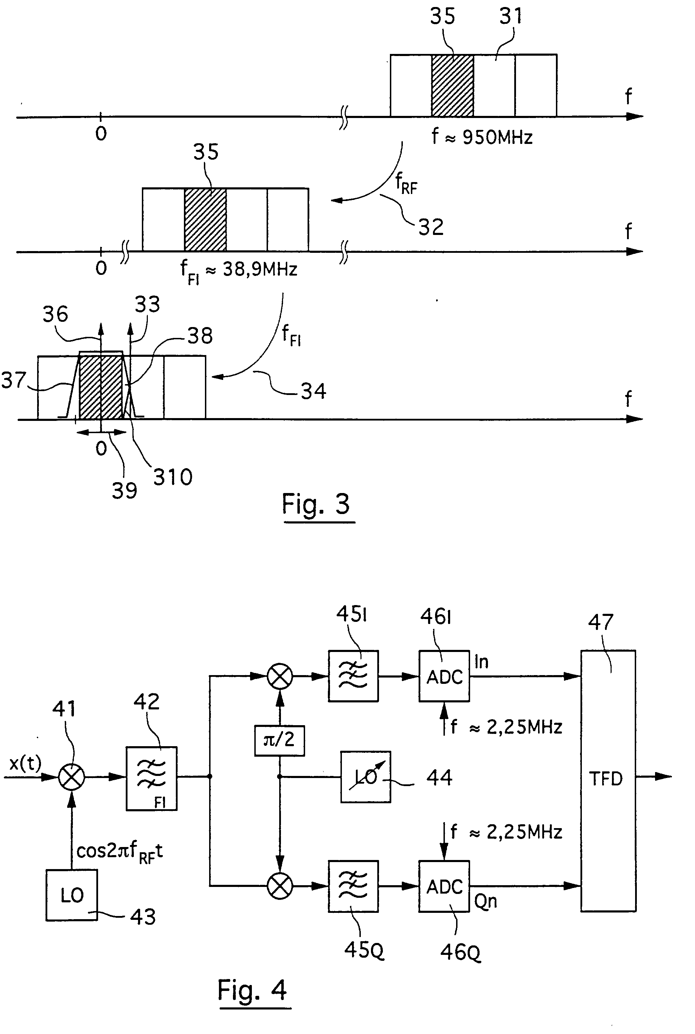

Pour cela, la transposition en fréquence basse réalisée par les récepteurs est sensiblement différente de celle effectuée classiquement, ainsi que cela est illustré en figure 3, dans le cas d'une transposition analogique.

Le signal 31 est classiquement émis en radiofréquence (RF), par exemple à 950 Mhz. Il subit donc une première multiplication 32 par une fréquence $F_{RF}$, qui le ramène en fréquence intermédiaire (FI), par exemple à 38,9 MHz. Une seconde multiplication 34 par une fréquence $f_{FI}$ ramène le signal en fréquence basse.

De façon classique, et pour un canal RF donné, les fréquences $f_{RF}$ et $f_{FI}$ sont fixes. En revanche, selon un mode de réalisation analogique de l'invention, l'une d'elles doit être variable.

En effet, on ne souhaite traiter qu'un seul bloc de signal, par exemple le bloc 35. On agit donc sur les fréquences de transposition pour que ce bloc 35 soit centré sur la fréquence nulle 36 après transposition (alors que généralement, c'est le signal complet qui est centré). Par exemple, si on agit sur $f_{FI}$, cette fréquence pourra être : $f_{FI} = 38,9 \pm f_i$, où $f_i$ dépend du bloc sélectionné.

Après transposition, le bloc sélectionné est filtré (37). De façon à sélectionner toutes les données utiles, il est nécessaire d'utiliser un gabarit de filtrage englobant également des éléments inutiles (bande atténuée due à un filtrage nécessairement non idéalement rectangle) 38. En conséquence, on appliquera également une tranformation 39 légèrement plus large.

Plus précisément, on utilise une fréquence d'échantillonnage 33 (par exemple 2,25 MHz) légèrement supérieure à la largeur du bloc (par exemple 1,92 MHz), de façon à provoquer un suréchantillonnage. En conséquence, la transformation 39 est définie de façon à englober la moitié de la bande atténuée 38. Ainsi, se produit un repliement de spectre 310 qui reste dans la zone de la bande atténuée, et ne pollue donc pas le signal utile. Par exemple, si le bloc 35 comprend 1750 points, la transformation 89 portera sur 2048 points.

La figure 4 illustre le cas d'un démodulateur analogique mettant en oeuvre cette technique.

Le signal reçu x(t) est classiquement transposé de RF en FI, par le démodulateur 41, qui multiplie x(t) par cos $2\pi f_{RF}t$, puis filtré par un filtre FOS 42 centré sur la fréquence FI, par exemple de l'ordre de 35 MHz. La fréquence fRF est délivrée par un oscillateur RF 43 de fréquence ajustable du synthoniseur permettant la sélection du canal RF.

Ensuite, on effectue la seconde transposition, qui est variable en fonction du bloc sélectionné. Elle est assurée par un second oscillateur variable 44, ajustable dans la bande $f_0, ...f_{B-1}$ de façon à ramener en bande de base le bloc voulu.

La démodulation se fait alors classiquement, pour obtenir après filtrage passe-bas $45_I$, $45_Q$ et échantillonnage $46_I$, $46_Q$ deux voies $I_n$ et $Q_n$ échantillonnées à la fréquence $f_s$ (par exemple 2,25 MHz) qui alimentent un circuit TFD 47 ne portant que sur le nombre de points (ou légèrement plus) formant le bloc (par exemple 2048).

Dans le cas d'une transposition numérique, telle qu'illustrée par la figure 5, on n'agit pas sur les fréquences RF et FI. En revanche, on réalise un échantillonnage à une fréquence beaucoup plus élevée (8 fois plus vite, par exemple) qu'en analogique.

Ainsi, le signal est classiquement transposé (51), filtré (52), numérisé (53) à une fréquence $f_s$ de l'ordre de 18MHz, puis à nouveau filtré (52').

La sélection d'un bloc se fait ensuite en multipliant 54 chaque échantillon par $e^{i\varphi(t)}$, où $\varphi(t)$ dépend du bloc voulu. Le signal obtenu est filtré par un filtre passe-bas 55, puis sous-échantillonné 56 d'un ordre 4, de façon à récupérer le signal voulu, qui alimente, après filtrage d'interpolation 57, 57', un circuit TFD 58.

## Revendications

1. Signal destiné à être transmis vers une pluralité de récepteurs, du type comprenant au moins deux signaux source autonomes et constitué d'une pluralité de fréquences porteuses sensiblement orthogonales modulées indépendamment, réparties sur une bande de fréquence déterminée (12), **caractérisé en ce que** ladite bande de fréquence (12) est découpée en au moins deux sous-bandes de fréquence ($13_1$ à $13_4$) comprenant chacune un jeu desdites fréquences porteuses sensiblement orthogonales (11), et **en ce qu'**on affecte à chacune desdites sous-bandes l'un desdits signaux source ($S_i$), de façon qu'un récepteur puisse extraire du signal transmis, par filtrage, au moins une desdites sous-bandes et effectuer un traitement de démodulation uniquement sur les fréquences porteuses contenues dans les sous-bandes extraites.

2. Signal selon la revendication 1, **caractérisé en ce que** lesdites sous-bandes ($13_1$ à $13_4$) sont jointives.

3. Signal selon l'une quelconque des revendications 1 et 2, **caractérisé en ce que** lesdites sous-bandes ($13_1$ à $13_4$) présentent des largeurs de bandes identiques.

4. Signal selon l'une quelconque des revendications 1 à 3, **caractérisé en ce que** l'affectation desdits signaux source ($S_i$) auxdites sous-bandes ($13_1$ à $13_4$) est variable dans le temps, de façon à maximiser la diversité en fréquence.

5. Signal selon la revendication 4, **caractérisé en ce que** ladite affectation est modifiée à chaque émission d'une trame dudit signal.

6. Signal selon l'une quelconque des revendications 1 à 5, **caractérisé en ce qu'**au moins un premier desdits signaux source ($S_i$) correspond à des informations de base d'un programme et au moins un second desdits signaux source ($S_i$) correspond à des informations complémentaires desdites informations de base, de façon à définir au moins deux niveaux de qualité de récepteur :

- un premier niveau de qualité correspondant à des récepteurs capables de traiter uniquement la sous-bande correspondant audit premier signal source ; et
- un second niveau de qualité correspondant à des récepteurs capables de traiter les sous-bandes correspondant auxdits premier et second signaux source.

**7.** Procédé d'émission d'un signal selon l'une quelconque des revendications 1 à 6, ledit signal étant destiné à être transmis vers une pluralité de récepteurs, signal du type comprenant au moins deux signaux source ($S_i$) autonomes et constitué d'une pluralité de fréquences porteuses (11) sensiblement orthogonales modulées indépendamment, réparties sur une bande de fréquence déterminée (12),
**caractérisé en ce qu'**il comprend les étapes suivantes :

- affectation audit signal d'une bande de fréquence déterminée (12), dans laquelle est définie une pluralité de fréquences porteuses sensiblement orthogonales (11);
- découpage de ladite bande de fréquence (12) en au moins deux sous-bandes de fréquence ($13_1$ à $13_4$), comprenant chacune un jeu desdites fréquences porteuses sensiblement orthogonales ;
- réception d'au moins deux signaux source ($S_i$) autonomes à émettre ;
- affectation à chacun desdits signaux source d'une desdites sous-bandes de fréquence ;
- regroupement desdites sous-bandes, de façon à former ledit signal à émettre ; et
- émission dudit signal à émettre.

**8.** Procédé selon la revendication 7, **caractérisé en ce que** lesdites sous-bandes ($13_1$ à $13_4$) sont jointives.

**9.** Procédé selon l'une quelconque des revendications 7 et 8, **caractérisé en ce que** ladite étape de regroupement des sous-bandes est précédée d'une étape de codage indépendant ($22_i$) et d'entrelacement fréquentiel et temporel ($23_i$) de chacun desdits signaux source, de façon à obtenir un jeu de signaux codés destinés à moduler chacune une desdites fréquences porteuses de la sous-bande affectée audit signal source.

**10.** Récepteur adapté à la réception d'un signal selon l'une quelconque des revendications 1 à 6 ou d'un signal émis suivant le procédé selon l'une quelconque des revendications 7 à 9,
ledit signal émis comprenant au moins deux signaux source ($S_i$) autonomes et étant constitué d'une pluralité de fréquences porteuses (11) sensiblement orthogonales modulées indépendamment, réparties sur une bande de fréquence déterminée (12),
**caractérisé en ce qu'**il comprend :

- des moyens de sélection d'un programme donné, correspondant à au moins une sous-bandes ($13_1$ à $13_4$) dudit signal émis, ce dernier étant découpé en au moins deux sous-bandes de fréquence ($13_1$ à $13_4$), comprenant chacune un jeu desdites fréquences porteuses sensiblement orthogonales ; et
- des moyens de transformation mathématique (47 ; 58) agissant sur les fréquences porteuses contenues dans la ou les sous-bandes sélectionnées.

**11.** Récepteur selon la revendication 10, **caractérisé en ce que** lesdits moyens de sélection comprennent des moyens de transposition analogique comprenant un premier oscillateur de transposition RF (43) et un second oscillateur de transposition FI (44), et des moyens de contrôle de la fréquence d'oscillation dudit premier et/ou dudit second oscillateur, en fonction de la ou des sous-bandes sélectionnées, de façon que celles-ci soient centrées sur une fréquence prédéterminée.

**12.** Récepteur selon la revendication 10, **caractérisé en ce que** lesdits moyens de sélection comprennent des premiers moyens de transposition analogique (51, 52) et des seconds moyens de transposition numérique (54) variables en fonction de la ou des sous-bandes sélectionnées, et des moyens de sous-échantillonnage (56).

**13.** Récepteur selon l'une quelconque des revendications 10 à 12, **caractérisé en ce que** lesdits moyens de transformation mathématique (47 ; 58) agissent sur un nombre de fréquences porteuses légèrement supérieur au nombre de fréquences porteuses contenues dans la ou les sous-bandes extraites, de façon à compenser l'imperfection due au filtrage d'extraction desdites sous-bandes.

**Patentansprüche**

**1.** Signal, das an eine Vielzahl von Empfängern gesendet wird, von der Art, die mindestens zwei autonome Quellensignale umfasst und aus einer Vielzahl von unabhängig modulierten, in etwa orthogonalen Trägerfrequenzen gebildet wird, die über ein festgelegtes Frequenzband (12) verteilt sind,

**dadurch gekennzeichnet, dass** das Frequenzband (12) in mindestens zwei Unterfrequenzbänder ($13_1$ bis $13_4$) unterteilt ist, die jeweils einen Satz der erwähnten, in etwa orthogonalen Trägerfrequenzen (11) umfassen und,

dass jedem dieser Unterbänder eines der Quellensignale ($S_i$) zugeordnet wird, so dass ein Empfänger durch Filterung mindestens eines der Unterbänder aus dem gesendeten Signal extrahieren kann, um nur die in den extrahierten Unterbändem enthaltenen Trägerfrequenzen zu demodulieren.

2. Signal nach Anspruch 1,
   **dadurch gekennzeichnet, dass** die Unterbänder ($13_1$ bis $13_4$) aneinander grenzen.

3. Signal nach einem der Ansprüche 1 oder 2,
   **dadurch gekennzeichnet, dass** die Unterbänder ($13_1$ bis $13_4$) die gleichen Bandbreiten aufweisen.

4. Signal nach einem der Ansprüche 1 bis 3,
   **dadurch gekennzeichnet, dass** die Zuordnung der Quellensignale ($S_i$) zu den Unterbändern ($13_1$ bis $13_4$) zeitlich variiert, um die Frequenzendiversität zu maximieren.

5. Signal nach Anspruch 4,
   **dadurch gekennzeichnet, dass** die Zuordnung bei jedem Senden eines Signalrasters geändert wird.

6. Signal nach einem der Ansprüche 1 bis 5,
   **dadurch gekennzeichnet, dass** mindestens ein erstes dieser Quellensignale ($S_i$) den Grundinformationen eines Programms entspricht und, dass mindestens ein zweites dieser Quellensignale ($S_i$) zusätzlichen Informationen dieser Grundinformationen entspricht, um mindestens zwei Qualitätsebenen für die Empfänger zu definieren:

   - eine erste Qualitätsebene, die Empfängern entspricht, welche in der Lage sind, nur das dem ersten Quellensignal zugeordnete Unterband zu bearbeiten und,
   - eine zweite Qualitätsebene, die Empfängern entspricht, welche in der Lage sind, die dem ersten und dem zweiten Quellensignal zugeordneten Unterbänder zu bearbeiten.

7. Sendeverfahren eines Signals nach einem der Ansprüche 1 bis 6, wobei das Signal an eine Vielzahl von Empfängern gesendet werden soll, wobei das Signal von der Art ist, die mindestens zwei autonome Quellensignale ($S_i$) umfasst und aus einer Vielzahl von unabhängig modulierten und in etwa orthogonalen Trägerfrequenzen (11) gebildet wird, die über ein festgelegtes Frequenzband (12) verteilt sind,

**dadurch gekennzeichnet, dass** es die folgenden Schritte umfasst:

   - Zuordnung eines Bandes mit festgelegter Frequenz (12) zum Signal, in dem eine Vielzahl von in etwa orthogonalen Trägerfrequenzen (11) definiert sind;
   - Unterteilen des Frequenzbandes (12) in mindestens zwei Unter-Frequenzbänder ($13_1$ bis $13_4$), die jeweils einen Satz dieser in etwa orthogonalen Trägerfrequenzen umfasst;
   - Empfang von mindestens zwei autonomen, zu sendenden Quellensignalen ($S_i$);
   - Zuordnung eines der Frequenzunterbänder zu jedem der Quellensignale;
   - Umgruppieren der Unterbänder, um das zu sendende Signal zu bilden und,
   - Senden des zu sendenden Signals.

8. Verfahren nach Anspruch 7,
   **dadurch gekennzeichnet, dass** die Unterbänder ($13_1$ bis $13_4$) aneinander grenzen.

9. Verfahren nach einem der Ansprüche 7 und 8,
   **dadurch gekennzeichnet, dass** vor dem Schritt zum Umgruppieren der Unterbänder ein Schritt zum unabhängigen Kodieren ($22_i$) und zum Verschachteln eines jeden der Quellensignale nach Frequenz und Zeit ($23_i$) eingefügt ist, um einen Satz kodierter Signale zu erhalten, die in der Lage sind, jeweils eines der dem Quellensignal zugeordneten Trägerfrequenz-Unterbänder zu modulieren.

10. Empfänger, der in der Lage ist, ein Signal nach einem der Ansprüche 1 bis 6 oder ein nach dem Verfahren nach einem der Ansprüche 7 bis 9 gesendetes Signal zu empfangen, wobei das gesendete Signal mindestens zwei autonome Quellensignale ($S_i$) umfasst und aus einer Mehrzahl von in etwa orthogonalen und unabhängig modulierten Trägerfrequenzen (11) gebildet wird, die über ein festgelegtes Frequenzband (12) verteilt sind,

**dadurch gekennzeichnet, dass** er folgendes umfasst:

   - Mittel zum Auswählen eines gegebenen Programms, die mindestens einem Unterband ($13_1$ bis $13_4$) des gesendeten Signals entsprechen, wobei dieses in mindestens zwei Frequenzunterbänder ($13_1$ bis $13_4$) unterteilt ist, die jeweils einen Satz der in etwa orthogonalen Trägerfrequenzen umfassen und,
   - mathematische Transformationsmittel (47; 58), die auf die in dem gewählten Unterband oder in den gewählten Unterbändern enthaltenen Trägerfrequenzen wirken.

11. Empfänger nach Anspruch 10, **dadurch gekennzeichnet, dass** die Auswahlmittel Mittel zum analogen Transponieren umfassen, bestehend aus einem ersten RF-Transpositionsoszillator (43) und einem zweiten FI-Transpositionsoszillator (44) sowie aus Steuermittel für die Schwingungsfrequenz des ersten und/oder des zweiten Oszillators, als Funktion des oder der gewählten Unterbänder, um sicherzustellen, dass diese auf eine vorgegebene Frequenz zentriert sind.

12. Empfänger nach Anspruch 10, **dadurch gekennzeichnet, dass** die Auswahlmittel erste Mittel zum analogen Transponieren (51, 52) und zweite Mittel zum digitalen Transponieren (54) umfassen, die als Funktion des gewählten Unterbandes oder der gewählten Unterbänder variieren, sowie Mittel zum Unterabtasten (56).

13. Empfänger nach einem der Ansprüche 10 bis 12, **dadurch gekennzeichnet, dass** die mathematischen Transformationsmittel (47; 58) auf eine Zahl von Trägerfrequenzen wirken, die etwas höher ist, als die in dem extrahierten Unterband oder in den extrahierten Unterbändern enthaltenen Zahl von Trägerfrequenzen ist, um die durch die Filterung verursachte Extraktionsungenauigkeit dieser Unterbänder zu kompensieren.

## Claims

1. Signal intended to be transmitted to a plurality of receivers, of the type comprising at least two autonomous source signals and consisting of a plurality of independently modulated, substantially orthogonal carrier frequencies distributed over a specific frequency band (12), **characterised in that** the said frequency band (12) is divided into at least two frequency sub-bands ($13_1$ to $13_4$), each comprising a set of the said substantially orthogonal carrier frequencies (11), and **in that** one of the said source signals ($S_i$) is allocated to each of the said sub-bands, so that a receiver can extract at least one of the said sub-bands from the transmitted signal by filtering and carry out demodulation processing only on the carrier frequencies contained in the extracted sub-bands.

2. Signal according to Claim 1, **characterised in that** the said sub-bands ($13_1$ to $13_4$) are contiguous.

3. Signal according to either one of Claims 1 and 2, **characterised in that** the said sub-bands ($13_1$ to $13_4$) have identical bandwidths.

4. Signal according to any one of Claims 1 to 3, **characterised in that** the allocation of the said source signals ($S_i$) to the said sub-bands ($13_1$ to $13_4$) is time-variable so as to maximise the frequency diversity.

5. Signal according to Claim 4, **characterised in that** the said allocation is modified upon each transmission of a frame of the said signal.

6. Signal according to any one of Claims 1 to 5, **characterised in that** at least a first of the said source signals ($S_i$) corresponds to basic information of a programme and at least a second of the said source signals ($S_i$) corresponds to information complementary to the said basic information, so as to define at least two receiver quality levels:

   - a first quality level corresponding to receivers capable of processing only the sub-band corresponding to the said first source signal; and
   - a second quality level corresponding to receivers capable of processing the sub-bands corresponding to the said first and second source signals.

7. Method for transmitting a signal according to any one of Claims 1 to 6, the said signal being intended to be transmitted to a plurality of receivers, which signal is of the type comprising at least two autonomous source signals ($S_i$) and consisting of a plurality of independently modulated, substantially orthogonal carrier frequencies (11) distributed over a specific frequency band (12), **characterised in that** it comprises the following steps:

   - allocation, to the said signal, of a specific frequency band (12), in which a plurality of substantially orthogonal carrier frequencies (11) are defined;
   - division of the said frequency band (12) into at least two frequency sub-bands ($13_1$ to $13_4$), each comprising a set of the said substantially orthogonal carrier frequencies;
   - reception of at least two autonomous source signals ($S_i$) to be transmitted;
   - allocation of one of the said frequency sub-bands to each of the said source signals;
   - regrouping of the said sub-bands so as to form the said signal to be transmitted; and
   - transmission of the said signal to be transmitted.

8. Method according to Claim 7, **characterised in that** the said sub-bands ($13_1$ to $13_4$) are contiguous.

9. Method according to either one of Claims 7 and 8, **characterised in that** the said step of regrouping the sub-bands is preceded by a step of independent encoding ($22_i$), and of interlacing in the frequency and time domain ($23_i$), of each of the said source signals, so as to obtain a set of encoded signals which are each intended to modulate one of the said carrier frequencies of the sub-band allocated to the said source signal.

10. Receiver designed for receiving a signal according to any one of Claims 1 to 6 or a signal transmitted using the method according to any one of Claims 7 to 9, the transmitted signal comprising at least two autonomous source signals ($S_i$) and consisting of a plurality of independently modulated, substantially orthogonal carrier frequencies (11) distributed over a specific frequency band (12), **characterised in that** it comprises:

    - means for selection of a given programme corresponding to at least one sub-band ($13_1$ to $13_4$) of the said transmitted signal, the latter being divided into at least two frequency sub-bands ($13_1$ to $13_4$), each comprising a set of the said substantially orthogonal carrier frequencies; and
    - means for mathematical transformation (47; 58) acting on the carrier frequencies contained in the selected sub-band or sub-bands.

11. Receiver according to Claim 10, **characterised in that** the said selection means comprise analogue-transposition means comprising a first oscillator for RF transposition (43) and a second oscillator for IF transposition (44), and means for controlling the oscillation frequency of the said first and/or of the said second oscillator as a function of the selected sub-band or sub-bands, so that they are centred on a predetermined frequency.

12. Receiver according to Claim 10, **characterised in that** the said selection means comprise first means for analogue transposition (51, 52) and second means for digital transposition (54) which are variable as a function of the selected sub-band or sub-bands, and under-sampling means (56).

13. Receiver according to any one of Claims 10 to 12, **characterised in that** the said means for mathematical transformation (47; 58) act on a number of carrier frequencies slightly higher than the number of carrier frequencies contained in the extracted sub-band or sub-bands, so as to compensate for the imperfection due to the extraction filtering of the said sub-bands.

Fig. 1

Fig. 2

Fig. 5

EP 0 765 549 B1

Fig. 3

Fig. 4